# EUROPEAN PATENT APPLICATION

(11) **EP 2 672 297 A2**
(43) Date of publication of application: **11.12.2013**
(21) Application number: 13170389.4
(22) Date of filing: 04.06.2013
(51) Int. Cl.: G01V 99/00

(54) **People in context**

(30) Priority: 04.06.2012 US 201261655218 P
(71) Applicant: Services Petroliers Schlumberger SA, 75007 Paris (FR); Schlumberger Holdings Limited, Tortola 1110 (VG); Schlumberger Technology B.V., 2514 JG The Hague (NL); Prad Research And Development Limited, Tortola 1110 (VG)
(72) Inventor: Schoen, Eric, Bellaire, TX Texas 77401 (US); Benum, Trond, 7024 Trondheim (NO); Meintanis, Konstantinos, Houston, TX Texas 77046 (US); Radhay, René, Houston, TX Texas 77056 (US)
(74) Representative: Ford, Michael Frederick

(57) **Abstract**

A method for contacting people involves identifying, prior to an exploration and production (E&P) tool session, a first person accessing a first portion of the historic information in a subterranean formation field data set, adding, prior to the E&P tool session, the first person to a people-in-context list by at least storing an identifier of the first person with a reference to the first portion of the historic information, presenting, during the E&P tool session to a user controlling the E&P tool session, a selection menu based on the people-in-context list, receiving, during the E&P tool session, a first selection from the user, wherein the first selection identifies the first person from the selection menu, and establishing, in response to the first selection from the user, a first communication session between the user and the first person in the people-in-context list.

## Description

### CROSS REFERENCE TO RELATED APPLICATIONS

This application claims priority under 35 U.S.C. § 119 (e) from Provisional Patent Application No. 61/655,218, filed on June 4, 2012, and entitled "PEOPLE IN CONTEXT," which is hereby incorporated by reference.

### BACKGROUND

Operations, such as geophysical surveying, drilling, logging, well completion, and production, may be performed to locate and gather valuable downhole fluids. Surveys are often performed using acquisition methodologies, such as seismic mapping, resistivity mapping, etc. to generate images of underground formations. These formations are often analyzed to determine the presence of subterranean assets, such as valuable fluids or minerals, or to determine if the formations have characteristics suitable for storing fluids. Although the subterranean assets are not limited to hydrocarbons such as oil, throughout this document, the terms "oilfield" and "oilfield operation" may be used interchangeably with the terms "field" and "field operation" to refer to a site where any types of valuable fluids or minerals can be found and the activities performed to extract them. The terms may also refer to sites where substances are deposited or stored by injecting them into the surface using boreholes and the operations associated with this process. Further, the term "field operation" refers to a field operation associated with a field, including activities related to field planning, wellbore drilling, wellbore completion, and/or production using the wellbore.

Models of subsurface hydrocarbon reservoirs and oil wells are often used in simulation (*e.g*., in modeling oil well behavior) to increase yields and to accelerate and/or enhance production from oil wells. Seismic interpretation tools and seismic-to-simulation programs, such as PETREL^{®} (a registered trademark of Schlumberger Technology Corporation, Houston, Texas), can include numerous functionalities and apply complex techniques across many aspects of modeling and simulating. Such programs include a large suite of tools and different programs. Users of such systems may spend many hours per day working with these tools in an effort to optimize geological interpretations and reservoir engineering development scenarios.

During a field operation, collected data (*e.g*., from the aforementioned surveys) from the field and/or data derived (*e.g*., from the aforementioned simulations) from analyzing the collected data are collectively referred to as historic information for the purpose of this disclosure. Traditionally, while historic information are shared by multiple people (*e.g*., users of the aforementioned modeling tools and software suites) who may make changes to the data, there has been a disconnect between the historic information and the ability to connect with people who have edited the data. This disconnect may be at a detailed level associated with data changes and also at a level of abstraction representing knowledge which can be acted upon to move geological interpretation activities forward.

### SUMMARY

In general, in one aspect, an embodiment of the invention relates to a method for contacting people associated with historic information during exploration and production (E&P) tool sessions of a field having a subterranean formation. The method includes identifying an E&P tool that performs an E&P tool session based on a subterranean formation field data set that, in turn, includes historic information. The method further includes identifying, by a computer processor and prior to the E&P tool session, a first person accessing a first portion of the historic information, and adding, by the computer processor and prior to the E&P tool session, the first person to a people-in-context list by at least storing an identifier of the first person with a reference to the first portion of the historic information. The method additionally includes, presenting, during the E&P tool session to a user controlling the E&P tool session, a selection menu based on the people-in-context list and receiving, during the E&P tool session, a first selection from the user. The first selection identifies the first person from the selection menu. The method also includes establishing, by the computer processor and in response to the first selection from the user, a first communication session between the user and the first person in the people-in-context list.

Other aspects of automatic well log correlation will be apparent from the following description and the appended claims.

### BRIEF DESCRIPTION OF DRAWINGS

The appended drawings illustrate several embodiments of people-in-context and are not to be considered limiting of its scope, for people-in-context may admit to other equally effective embodiments.

FIG. 1.1 is a schematic view, partially in cross-section, of a field in which one or more embodiments of people-in-context may be implemented.

FIG. 1.2 shows an exploration and production modeling tool in accordance with one or more embodiments.

FIG. 2 shows an example method for people-in-context in accordance with one or more embodiments.

FIGS. 3.1, 3.2, 3.3, and 3.4 depict an example for people-in-context in accordance with one or more embodiments.

FIG. 4 depicts a computer system using which one or more embodiments of people-in-context may be implemented.

### DETAILED DESCRIPTION

Aspects of the present disclosure are shown in the above-identified drawings and described below. In the description, like or identical reference numerals are used to identify common or similar elements. The drawings may not be to scale and certain features may be shown exaggerated in scale or in schematic in the interest of clarity and conciseness.

Aspects of the present disclosure include a method, system, and computer readable medium to bring people and their input to the interpretation process in the hydrocarbon exploration and production (E&P) space closer together to facilitate more rapid access to knowledge and the people who are part of decisions that are being made. By having immediate access to people involved in the generation of knowledge and data-in-context of interpretations, decisions can be made more quickly or processes started to reach out to persons who have been a part of decisions without any lengthy investigation to figure out who has been involved in the process. In one or more embodiments, the people involved in the generation of knowledge and data may be users of the E&P tool and are referred to as users. Throughout this disclosure, the terms people, person, and user may be user interchangeably based on the context.

In one or more embodiments, a virtual tag is assigned to a location and/or data object - and allows for the addition of text, link, image, document, etc. to explain information about or concerning the item or location in question. It also allows for the selection of an annotation "type" by the selection of a graphical icon that gives the other users an understanding of the nature of the annotation, example: basic informative, notification, alert, people involved in the generation of knowledge and data, etc. Further, history of an object in terms of data associated with the object and changes made to the object are stored together with their timestamps. Accordingly, users can search across their organization for data relevant to their interpretation space.

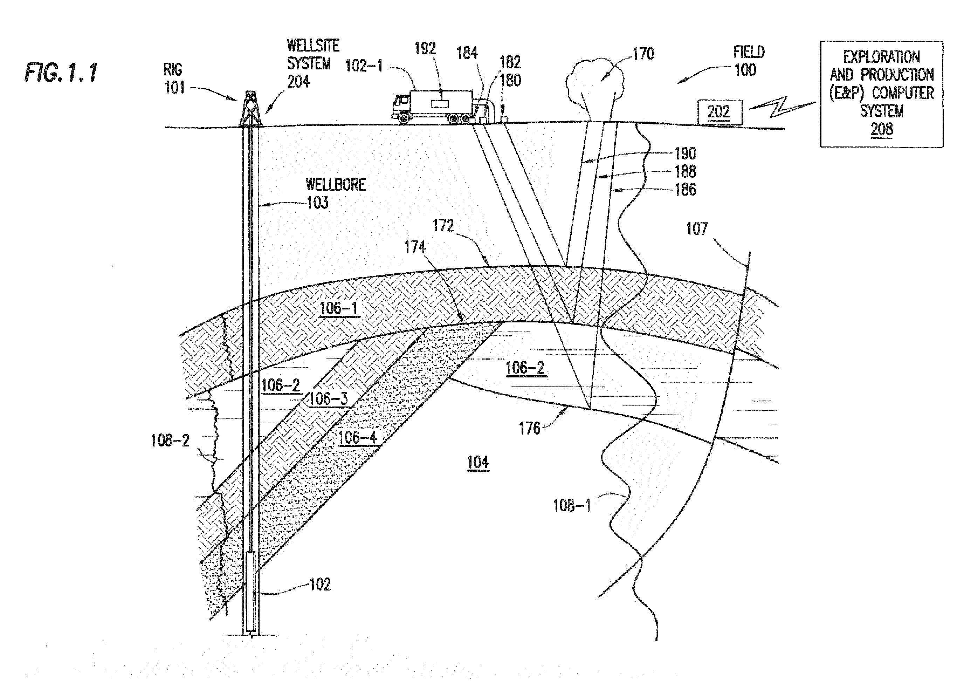

FIG. 1.1 depicts a schematic view, partially in cross section, of a field (100) in which one or more embodiments of people-in-context may be implemented. In one or more embodiments, one or more of the modules and elements shown in FIG. 1.1 may be omitted, repeated, and/or substituted. Accordingly, embodiments of people-in-context should not be considered limited to the specific arrangements of modules shown in FIG. 1.1.

As shown in FIG. 1.1, the subterranean formation (104) includes several geological structures (106-1 through 106-4). As shown, the formation has a sandstone layer (106-1), a limestone layer (106-2), a shale layer (106-3), and a sand layer (106-4). A fault line (107) extends through the formation. In one or more embodiments, various survey tools and/or data acquisition tools are adapted to measure the formation and detect the characteristics of the geological structures of the formation. As noted above, the outputs of these various survey tools and/or data acquisition tools, as well as data derived from analyzing the outputs, are considered as part of the historic information.

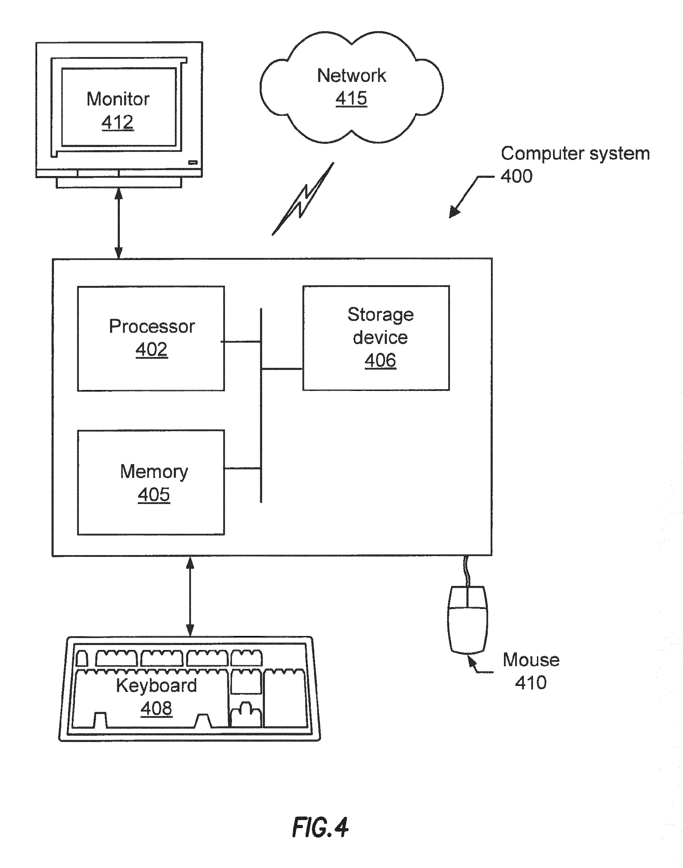

As shown in FIG. 1.1, seismic truck (102-1) represents a survey tool that is adapted to measure properties of the subterranean formation in a seismic survey operation based on sound vibrations. One such sound vibration (*e.g*., 186, 188, 190) generated by a source (170) reflects off a plurality of horizons (*e.g*., 172, 174, 176) in the subterranean formation (104). Each of the sound vibrations (*e.g.,* 186, 188, 190) are received by one or more sensors (*e.g.,* 180, 182, 184), such as geophone-receivers, situated on the earth's surface. The geophones produce electrical output signals, which may be transmitted, for example, as input data to a computer (192) on the seismic truck (102-1). Responsive to the input data, the computer (192) may generate a seismic data output, which may be logged and provided to a surface unit (202) for further analysis. The computer (192) may be the computer system shown and described in relation to FIG. 4.

Further as shown in FIG. 1.1, the wellsite system (204) is associated with a rig (101), a wellbore (103), and other wellsite equipment and is configured to perform wellbore operations, such as logging, drilling, fracturing, production, or other applicable operations. Generally, survey operations and wellbore operations are referred to as field operations of the field (100). These field operations may be performed as directed by the surface unit (202).

In one or more embodiments, the surface unit (202) is operatively coupled to the computer (192) and/or a wellsite system (204). In particular, the surface unit (202) is configured to communicate with the computer (192) and/or the data acquisition tool (102) to send commands to the computer (192) and/or the data acquisition tools (102) and to receive data therefrom. For example, the data acquisition tool (102) may be adapted for measuring downhole properties using logging-while-drilling ("LWD") tools. In one or more embodiments, surface unit (202) may be located at the wellsite system (204) and/or remote locations. The surface unit (202) may be provided with computer facilities for receiving, storing, processing, and/or analyzing data from the computer (192), the data acquisition tool (102), or other part of the field (100). The surface unit (202) may also be provided with or functionally for actuating mechanisms at the field (100). The surface unit (202) may then send command signals to the field (100) in response to data received, for example to control and/or optimize various field operations described above.

In one or more embodiments, the data received by the surface unit (202) represents characteristics of the subterranean formation (104) and may include seismic data and/or information related to porosity, saturation, permeability, natural fractures, stress magnitude and orientations, elastic properties, etc. during a drilling, fracturing, logging, or production operation of the wellbore (103) at the wellsite system (204). For example, data plot (108-1) may be a seismic two-way response time or other types of seismic measurement data. In another example, data plot (108-2) may be a wireline log, which is a measurement of a formation property as a function of depth taken by an electrically powered instrument to infer properties and make decisions about drilling and production operations. The record of the measurements, which may be printed on a long strip of paper, may also be referred to as a log. Measurements obtained by a wireline log may include resistivity measurements obtained by a resistivity measuring tool. In yet another example, the data plot (108-2) may be a plot of a dynamic property, such as the fluid flow rate over time during production operations. Those skilled in the art will appreciate that other data may also be collected, such as, but not limited to, historical data, user inputs, economic information, other measurement data, and other parameters of interest.

In one or more embodiments, the surface unit (202) is communicatively coupled to an exploration and production (E&P) computer system (208). In one or more embodiments, the data received by the surface unit (202) may be sent to the E&P computer system (208) for further analysis. Generally, the E&P computer system (208) is configured to analyze, model, control, optimize, or perform other management tasks of the aforementioned field operations based on the data provided from the surface unit (202). In one or more embodiments, the E&P computer system (208) is provided with functionality for manipulating and analyzing the data, such as performing seismic interpretation or borehole resistivity image log interpretation to identify geological surfaces in the subterranean formation (104) or performing simulation, planning, and optimization of production operations of the wellsite system (204). In one or more embodiments, the result generated by the E&P computer system (208) may be displayed for user viewing using a two dimensional (2D) display, three dimensional (3D) display, or other suitable displays. Although the surface unit (202) is shown as separate from the E&P computer system (208) in FIG. 1.1, in other examples, the surface unit (202) and the E&P computer system (208) may also be combined.

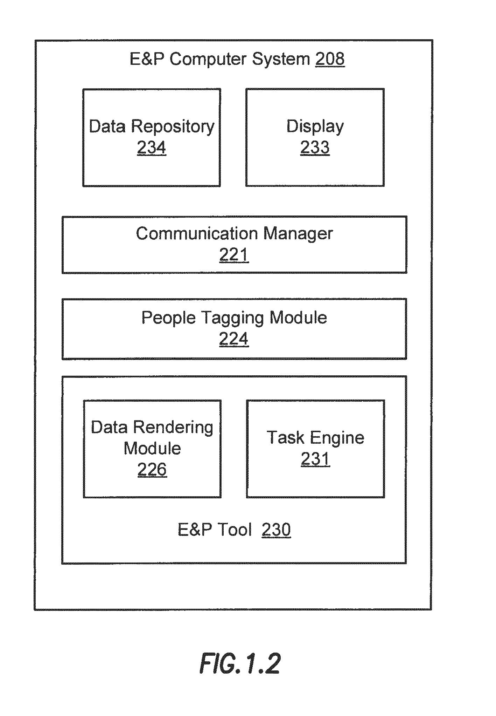

FIG. 1.2 shows more details of the E&P computer system (208) in which one or more embodiments of people-in-context may be implemented. In one or more embodiments, one or more of the modules and elements shown in FIG. 1.2 may be omitted, repeated, and/or substituted. Accordingly, embodiments of people-in-context should not be considered limited to the specific arrangements of modules shown in FIG. 1.2.

As shown in FIG. 1.2, the E&P computer system (208) includes E&P tool (230) having task engine (231) and data rendering module (226), people tagging module (224), communication manager (221), data repository (234), and display (233). Each of these elements is described below.

In one or more embodiments, the E&P computer system (208) includes the E&P tool (230) having software instructions stored in a memory and executing on a processor to communicate with the surface unit (202) for receiving data therefrom and to manage (*e.g*., analyze, model, control, optimize, or perform other management tasks) the aforementioned field operations based on the received data. In one or more embodiments, the received data is stored in the data repository (234) to be processed by the E&P tool (230). One or more field operation management tasks (*e.g*., analysis task, modeling task, control task, optimization task, etc.) may be performed in an execution pass of the E&P tool (230), referred to as an E&P tool session. During the E&P tool session, the received data is manipulated by the task engine (231) to generate, continuously or intermittently, preliminary results that are rendered and displayed to the user using the data rendering module (226) and the display (233), respectively. For example, the E&P tool session may be a seismic interpretation session where the task engine (231) processes the seismic data set and the data rendering module (226) renders interpreted seismic results to be displayed to the user using the display (233). In one or more embodiments, the E&P tool (230) is hosted on a computer server where multiple users may access the E&P tool (230) during multiple E&P tool sessions. For example, some of these multiple E&P tool sessions may be concurrent sessions when more than one user may be accessing the E&P tool (230) at any point of time. In one or more embodiments, the display (233) may be a two-dimensional (2D) display, a three-dimensional (3D) display, or other suitable display device. The processor and memory of the E&P computer system (208) are not explicitly depicted in FIG. 1.2 so as not to obscure other elements of the E&P computer system (208). An example of such processor and memory is described in reference to FIG. 4 below.

In one or more embodiments, the E&P computer system (208) includes a people tagging module (224) configured to tag a user who accesses (*e.g*., create, store, retrieve, modify, etc.) historic information in the data repository (234). Specifically, the people tagging module (224) is configured to store identification information of the user in association with the particular piece of historic information (*e.g*., a file, a data log, an email, a note, etc.) accessed by the user. Accordingly, such user is referred to as a people-in-context with respect to the particular piece of historic information. Further, the people tagging module (224) is configured to tag the accessed piece of historic information with a time stamp. In particular, the time stamp corresponds to a specific point in time when the user accesses the particular piece of historic information. In one or more embodiments, each user accesses the E&P tool (230) using a user account based on a user identifier of the user. In such embodiments, the user identifier is obtained by the people tagging module (224) and stored as the aforementioned user information. In one or more embodiments, the user information and associated time stamp are stored in a pre-determined data structure (*e.g*., a people-in-context relational database) in the data repository (234).

The data repository (234) (and/or any of the historic information stored therein) may be a data store such as a database, a file system, one or more data structures (*e.g*., arrays, link lists, tables, hierarchical data structures, etc.) configured in a memory, an extensible markup language (XML) file, any other suitable medium for storing data, or any suitable combination thereof. The data repository (234) may be a device internal to the E&P computer system (208). Alternatively, the data repository (234) may be an external storage device operatively connected to the E&P computer system (208).

In one or more embodiments, the communication manager (221) is configured to allow a user of the E&P tool (230) to communication with another user (*i.e*., people-in-context) tagged onto a piece of historic information used by the E&P tool (230). Specifically, the communication manager (221) identifies people-in-context that the piece of historic information is tagged with. In one or more embodiments, the communication manager (221) identifies people-in-context based on the aforementioned people-in-context relational database in the data repository (234). Once identified, the communication manager (221) presents the people-in-context to the user and allows the user to select one or more person of the people-in-context to contact. For example, the user may select a person from a drop-down menu displaying people-in-context and send an instant message (or other form of communication, such as email, phone call, etc.) to the selected person. In one or more embodiments, the communication manager (221) establishes the communication between the user and the selected person using a third party messaging service. For example, the email address, phone number, or other communication address information of the selected person is retrieved from a contact list maintained by the third party messaging service. Specifically, the email address, phone number, or other communication address information is indexed in the contact list using user identifiers, including the user identifiers of the people-in-context. In one or more embodiments, a communication window (*e.g*., containing the messages, emails, transcribed phone call, etc.) is superimposed over the display generated by the data rendering module (226). An example of user selecting, and communicating people-in-context during an E&P tool session is described below.

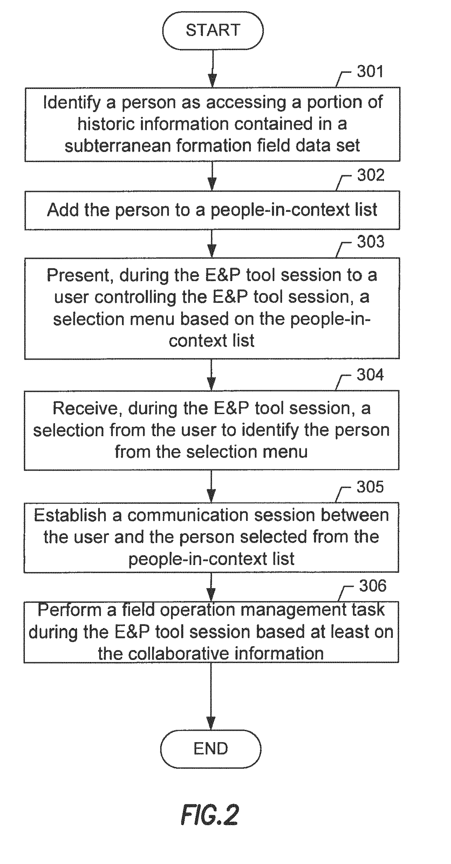

FIG. 2 depicts an example method for the people-in-context in accordance with one or more embodiments. For example, the method depicted in FIG. 2 may be practiced using the E&P computer system (208) described in reference to FIGS. 1.1 and 1.2 above. In one or more embodiments, one or more of the elements shown in FIG. 2 may be omitted, repeated, and/or performed in a different order. Accordingly, embodiments of the people-in-context should not be considered limited to the specific arrangements of elements shown in FIG. 2.

Initially in Block 301, a person is identified as accessing a portion of historic information contained in a subterranean formation field data set. In one or more embodiments, the historic information includes survey data collected from the field, simulation data derived from the survey data, and user notes linked to the survey data or the simulation data. In one or more embodiments, the historic information is used by an exploration and production (E&P) tool to perform an E&P tool session based on the subterranean formation field data set. For example, the E&P tool session may be a seismic interpretation session while the historic information may be a seismic data volume.

In Block 302, the person is added to a people-in-context list. In one or more embodiments, the person is added by storing an identifier of the person with a reference to the portion of the historic information. For example, the identifier may include a domain name, an alias, a user identifier, etc. of the person.

In Block 303, during the E&P tool session, a selection menu based on the people-in-context list is presented to a user controlling the E&P tool session. For example, the selection menu may include a portion of the people-in-context list that has entries compiled within a pre-determined time period of the E&P tool session. In another example, the selection menu may include a portion of the people-in-context list that is associated with a project team of the user.

In Block 304, during the E&P tool session, a selection is received from the user. In particular, the selection identifies the person from the selection menu. For example, the user controlling the E&P tool session has determined that the person who accessed the portion of historic information is someone that the user wishes to collaborate with during the E&P tool session. In particular, the person has made a revision to the seismic data volume that is used by the user during the E&P tool session of seismic interpretation.

In Block 305, in response to the selection from the user, a communication session is established between the user and the person selected from the people-in-context list. In one or more embodiments, the communication session includes an email message, a chat message, an online meeting, a phone call, remote screen sharing, or a combination of the above. In one or more embodiments, the communication session is established via a third party messaging service. For example, the email address, phone number, or other communication address information of the selected person used to establish the communication session may be retrieved from a contact list maintained by the third party messaging service. Specifically, the email address, phone number, or other communication address information is indexed in the contact list using user identifiers, including the user identifiers of the people-in-context.

In one or more embodiments, the user and the selected person may collaborate during the E&P session using the communication session. Specifically, collaborative information with respect to the portion of the historic information is received from the selected person during the communication session.

In Block 306, a field operation management task is performed during the E&P tool session based at least on the collaborative information. In one or more embodiments, the field operation management task includes one or more of an analysis task, modeling task, control task, and optimization task of seismic interpretation session based on a seismic data volume.

In one or more embodiments, the selected person accesses the portion of the historic information prior to the E&P tool session. In other words, the person is already included in the people-in-context list prior to the E&P tool session.

In one or more embodiments, the selected person accesses the portion of the historic information concurrent to the E&P tool session. For example, the selected person him/herself may be conducting another E&P tool session that shares the subterranean formation field data set with the user. In other words, the person is being inserted into the people-in-context list concurrent to the E&P tool session.

In one or more embodiments, during the E&P tool session, the historic information, the selection menu, and the collaborative information are displayed using a single user interface of the E&P tool.

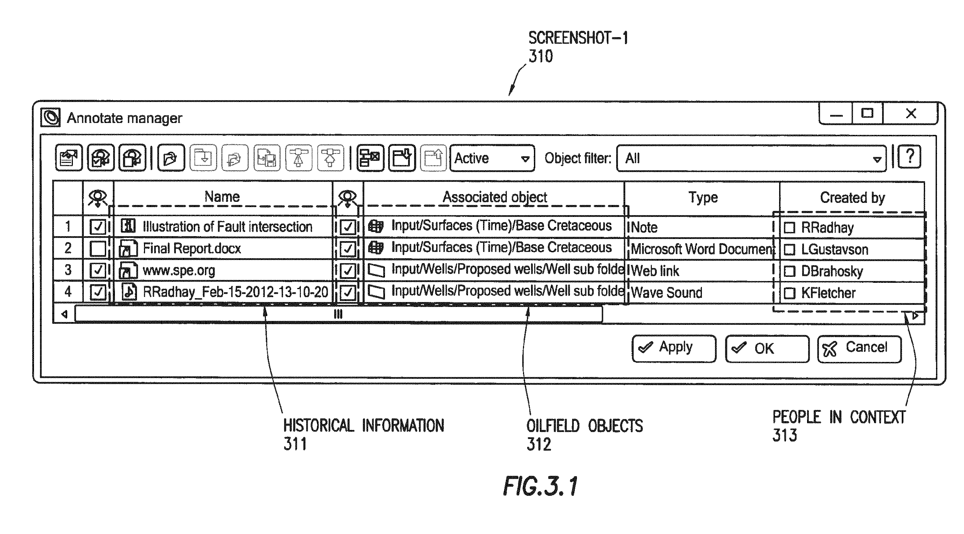

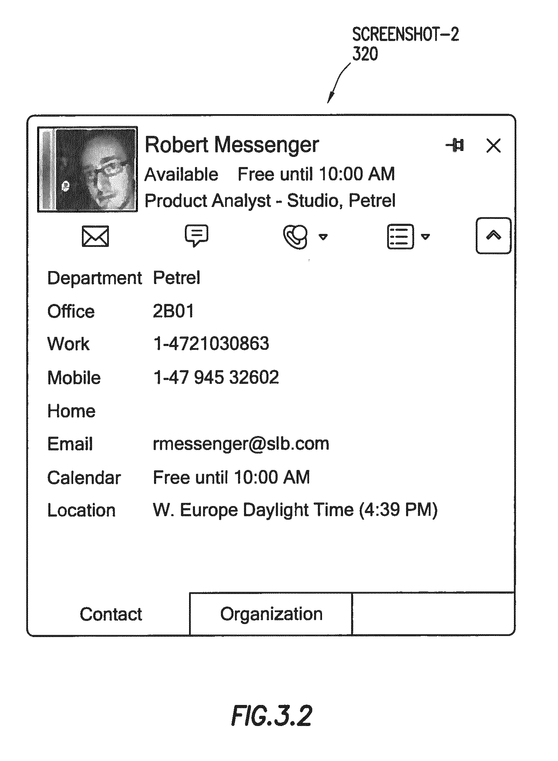

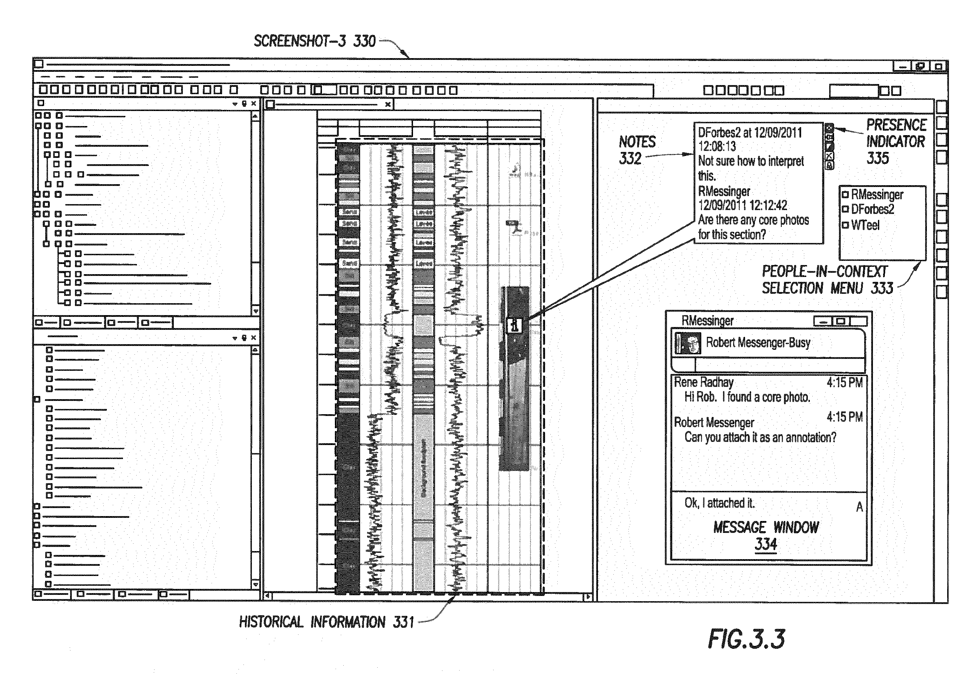

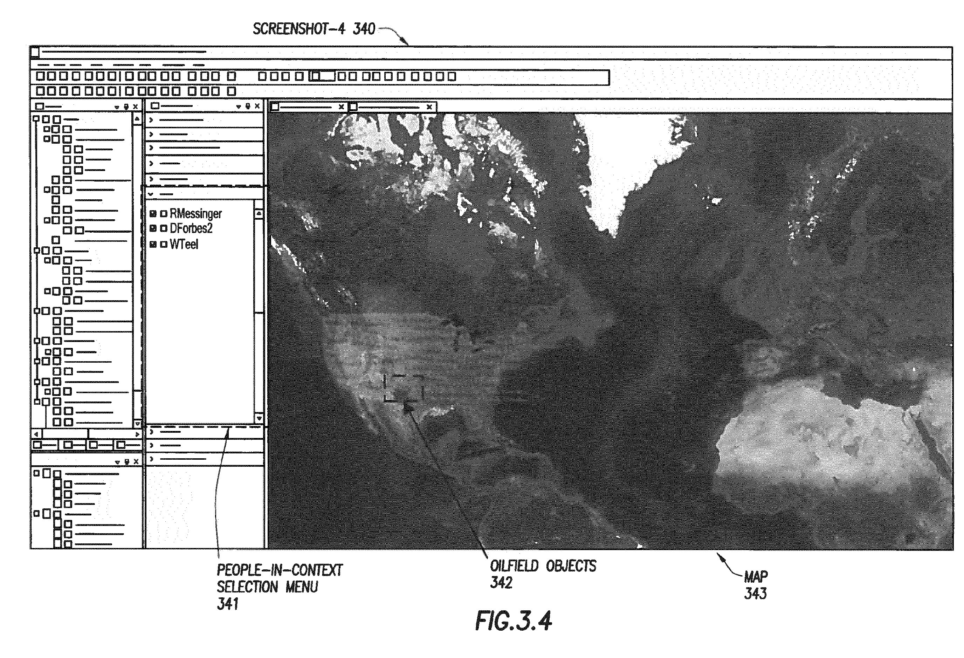

FIGS. 3.1, 3.2, 3.3, and 3.4 depict various screenshots that further illustrate the people-in-context in accordance with one or more embodiments. In one of more embodiments, the example depicted in FIGS. 3.1-3.4 in practice uses the E&P computer system (208) described above. Specifically, the example depicted in FIGS. 3.1-3.4 relates to a scenario where a third party messaging service (*e.g*., Microsoft Lync® [a registered trademark of Microsoft, Redmond, Washington]) is integrated, via the communication manager (221) with the E&P tool (230) where history information is used. In this example, a user is able to, using history information in the system for an object, contact persons who have interacted with the data. The online status of persons may be seen through Microsoft Lync, and the contact options of Microsoft Lync may be used to reach out to persons-in-context, including email, chat, scheduling a meeting, making a phone call or screen sharing of the contacted user's desktop. Users are able to contact people in the context of lower level data changes and also able to contact people-in-context of notes and knowledge that people add to the system which will have much higher level information used as part of the interpretation process. Also, based on functionality available in the software to search for data across the user's entire organization, the user can see the online status and contact people based on changes to data in the user's local project and also based on changes to data across the entire organization.

FIG. 3.1 shows a screenshot-1 (310) of a detailed list of changes for various pieces of information in the historic information (311). For example, these various pieces of information are associated with oilfield objects (312) in a seismic interpretation session, during which people-in-context (313) (*i.e.,* people who made the changes or created the objects) can be contacted, for example via the means depicted in FIG. 3.2 below.

FIG. 3.2 shows a screenshot-2 (320) of a person-in-context that is identified based on presence indicators tagged onto data. For example, the screenshot-2 (320) corresponds to an information window that is displayed when one person is selected from the people-in-context (313) via the screenshot-1 (310). Based on the information displayed, the selected person in the person-in-context (313) can be contacted by various means, such as chat, email, schedule meeting, phone call, etc.

FIG. 3.3 shows a screenshot-3 (330) of an interpretation session. Specifically, historic information (331) includes data logs where pieces of knowledge have been added in the form of notes (332). As shown, the notes (332) include user comments/questions that are added to the historic information (331). In particular, the people-in-context selection menu (333) is displayed when a user clicks a presence indicator (335) in the notes (332). When the user selects one person from the people-in-context selection menu (333), the message window (334) is opened for contacting the selected person. As shown, the messaging window (334) displays messages exchanged between the user and the selected person who has previously added knowledge to the notes (332).

FIG. 3.4 shows a screenshot-4 (340) displaying the people who have interacted with data across the entire organization. As shown, the screenshot-4 (340) includes the map (343) showing oilfield objects (342) that are of interest of a user. For example, the oilfield objects (342) may be identified based on various filters configured by the user to narrow down to a portion of the data across the entire organization that is of interest to the user. Once data of interest is identified, presence indicators corresponding to users who interacted with any of this data of interest are displayed in the people-in-context selection menu (341). As noted above, these indicators can be used to contact any person listed in the people-in-context selection menu (341).

Embodiments of people-in-context may be implemented on virtually any type of computer regardless of the platform being used. For instance, as shown in FIG. 4, a computer system (400) includes one or more processor(s) (402) such as a central processing unit (CPU) or other hardware processor, associated memory (405) (*e.g*., random access memory (RAM), cache memory, flash memory, etc.), a storage device (406) (*e.g*., a hard disk, an optical drive such as a compact disk drive or digital video disk (DVD) drive, a flash memory stick, etc.), and numerous other elements and functionalities typical of today's computers (not shown). The computer (400) may also include input means, such as a keyboard (408), a mouse (410), or a microphone (not shown). Further, the computer (400) may include output means, such as a monitor (412) (*e.g*., a liquid crystal display LCD, a plasma display, or cathode ray tube (CRT) monitor). The computer system (400) may be connected to a network (415) (*e.g*., a local area network (LAN), a wide area network (WAN) such as the Internet, or any other similar type of network) via a network interface connection (not shown). Those skilled in the art will appreciate that many different types of computer systems exist (*e.g*., workstation, desktop computer, a laptop computer, a personal media device, a mobile device, such as a cell phone or personal digital assistant, or any other computing system capable of executing computer readable instructions), and the aforementioned input and output means may take other forms, now known or later developed. Generally speaking, the computer system (400) includes at least the minimal processing, input, and/or output means to practice one or more embodiments.

Further, those skilled in the art will appreciate that one or more elements of the aforementioned computer system (400) may be located at a remote location and connected to the other elements over a network. Further, one or more embodiments may be implemented on a distributed system having a plurality of nodes, where each portion of the implementation may be located on a different node within the distributed system. In one or more embodiments, the node corresponds to a computer system. Alternatively, the node may correspond to a processor with associated physical memory. The node may alternatively correspond to a processor with shared memory and/or resources. Further, software instructions to perform one or more embodiments may be stored on a computer readable medium such as a compact disc (CD), a diskette, a tape, or any other computer readable storage device.

The systems and methods provided relate to the acquisition of hydrocarbons from an oilfield. It will be appreciated that the same systems and methods may be used for performing subsurface operations, such as mining, water retrieval, and acquisition of other underground fluids or other geomaterials from other fields. Further, portions of the systems and methods may be implemented as software, hardware, firmware, or combinations thereof.

While people-in-context has been described with respect to a limited number of embodiments, those skilled in the art, having benefit of this disclosure, will appreciate that other embodiments can be devised which do not depart from the scope of the disclosure herein. As such, although the preceding description has been described herein with reference to particular means, materials, and embodiments, it is not intended to be limited to the particulars disclosed herein. Rather, it extends to all functionally equivalent structures, methods, and uses, such as are within the scope of the appended claims.

## Claims

1. A method for contacting people associated with historic information (311, 331) during exploration and production (E&P) tool sessions of a field (100) having a subterranean formation (104), comprising:
identifying an E&P tool (230) configured to perform an E&P tool session based on a subterranean formation field data set, wherein the subterranean formation field data set comprises historic information (311, 331);
identifying, prior to the E&P tool session, a first person accessing a first portion of the historic information (311, 331);
adding, prior to the E&P tool session, the first person to a people-in-context list (313) by at least storing an identifier of the first person with a reference to the first portion of the historic information (311, 331);
presenting, during the E&P tool session to a user controlling the E&P tool session, a selection menu (333, 341) based on the people-in-context list (313);
receiving, during the E&P tool session, a first selection from the user, wherein the first selection identifies the first person from the selection menu (333, 341); and
establishing, in response to the first selection from the user, a first communication session between the user and the first person in the people-in-context list (313).

2. The method of claim 1, further comprising:
receiving, from the first person during the first communication session, collaborative information with respect to the first portion of the historic information (311, 331); and
performing a field operation management task during the E&P tool session based at least on the collaborative information.

3. The method of claim 2, further comprising:
displaying, during the E&P tool session, the historic information (311, 331), the selection menu (333, 341), and the collaborative information using a single user interface (330) of the E&P tool (230).

4. The method of claim 1, wherein the first person accesses the first portion of the historic information (311, 331) prior to the E&P tool session.

5. The method of claim 1, further comprising:
adding, in response to a second person accessing a second portion of the historic information (311, 331) during the E&P tool session, the second person to the people-in-context list (313);
receiving, during the E&P tool session, a second selection from the user, wherein the second selection identifies the second person from the selection menu (333, 341); and
establishing, in response to the second selection from the user, a second communication session between the user and the second person in the people-in-context list (313).

6. The method of claim 1,
wherein the first communication session comprises at least one selected from a group consisting of an email message, a chat message (334), an online meeting, a phone call, and remote screen sharing.

7. The method of claim 1,
wherein the historic information (311, 331) comprises survey data collected from the field (100), simulation data derived from the survey data, and user notes (332) linked to at least one selected from a group consisting of the survey data and the simulation data.

8. A system for contacting people associated with historic information (311, 331) during exploration and production (E&P) tool sessions of a field (100) having a subterranean formation (104), comprising:
a processor (402) and memory (405);
an E&P tool (230) stored in the memory (405), executing on the processor (402), and configured to perform an E&P tool session based on a subterranean formation field data set, wherein the subterranean formation field data set comprises historic information (311, 331);
a people tagging module (224) stored in the memory (405), executing on the processor (402), and configured to:
identify, prior to the E&P tool session, a first person accessing a first portion of the historic information (311, 331); and
add, prior to the E&P tool session, the first person to a people-in-context list (313) by at least storing an identifier of the first person with a reference to the first portion of the historic information (311, 331);
a communication manager (221) stored in the memory (405), executing on the processor (402), and configured to:
present, during the E&P tool session to a user controlling the E&P tool session, a selection menu (333, 341) based on the people-in-context list (313);
receive, during the E&P tool session, a first selection from the user, wherein the first selection identifies the first person from the selection menu (333, 341); and
establish, in response to the first selection from the user, a first communication session between the user and a second person in the people-in-context list (313), wherein the first person in the people-in-context list (313);
a display (233, 412) configured to display the E&P tool session superimposed by the selection menu (333, 341); and
a repository (234, 406) configured to store the historic information (311,331).

9. The system of claim 8,
wherein the communication manager (221) is further configured to receive, from the first person during the first communication session, collaborative information with respect to the first portion of the historic information (311, 331); and
wherein the E&P tool (230) is further configured to perform a field operation management task during the E&P tool session based at least on the collaborative information.

10. The system of claim 9, further comprising:
displaying, during the E&P tool session, the historic information (311, 331), the selection menu (333, 341), and the collaborative information using a single user interface (330) of the E&P tool (230).

11. The system of claim 8, wherein the first person accesses the first portion of the historic information (311, 331) prior to the E&P tool session.

12. The system of claim 8,
wherein the people tagging module (224) is further configured to:
add, in response to a second person accessing a second portion of the historic information (311, 331) during the E&P tool session, the second person to the people-in-context list (313), and
wherein the communication manager (221) is further configured to:
receive, during the E&P tool session, a second selection from the user, wherein the second selection identifies the second person from the selection menu (333, 341); and
establish, in response to the second selection from the user, a second communication session between the user and the second person in the people-in-context list (313).

13. The system of claim 8,
wherein the first communication session comprises at least one selected from a group consisting of an email message, a chat message (334), an online meeting, a phone call, and remote screen sharing.

14. The system of claim 8,
wherein the historic information (311,331) comprises survey data collected from the field (100), simulation data derived from the survey data, and user notes (332) linked to at least one selected from a group consisting of the survey data and the simulation data.

15. A computer program product comprising computer readable program code embodied therein for performing a method according to any of claims 1-7.
